# EUROPEAN PATENT APPLICATION

(11) **EP 4 443 555 A1**
(43) Date of publication of application: **09.10.2024**
(21) Application number: 24167549.5
(22) Date of filing: 28.03.2024
(51) Int. Cl.: H01M 4/36, H01M 4/525, H01M 4/58, H01M 4/66, H01M 4/62, H01M 10/0525, H01M 4/02

(54) **SECONDARY BATTERY AND ELECTRONIC DEVICE**

(30) Priority: 31.03.2023 CN 202310339397
(71) Applicant: Ningde Amperex Technology Ltd., Ningde City, Fujian 352100 (CN)
(72) Inventor: HU, Kewen, Ningde City, Fujian Province, People s Republic of China, 352100 (CN)
(74) Representative: Icosa

(57) **Abstract**

A secondary battery includes a positive electrode plate (10). The positive electrode plate (10) includes a current collector (11), a conductive layer (12), a first active substance layer (13) and a second active substance layer (14). The conductive layer (12), the first active substance layer (13) and the second active substance layer (14) are sequentially stacked on a surface of the current collector (11). By providing the conductive layer (12) between the first active substance layer (13) and the current collector (11), the defect of electrochemical corrosion on the surface of the current collector can be effectively overcome, thus reducing the interface impedance between the current collector (11) and the second active substance layer (14) and improving the performance of the secondary battery.

## Description

### TECHNICAL FIELD

This application relates to the technical field of batteries, in particular to a secondary battery and an electronic device.

### BACKGROUND

Secondary batteries, such as lithium-ion batteries, have the characteristics of high specific energy, high working voltage, low self-discharge rate, small size and light weight, making them widely used in the field of consumer electronics. With the widespread application of lithium-ion batteries, the market has put forward increasingly high requirements on the safety performance of lithium-ion batteries.

In related technologies, in order to improve the energy density, cycle performance, safety performance and other battery performance of secondary batteries, double-layer coating is usually adopted for a positive electrode plate, that is, a first active substance layer is coated on one surface of a positive electrode current collector, and then a second active substance layer is coated on the surface of the first active substance layer. However, the above technical solution has brought some problems to secondary batteries, such as an increase in internal resistance growth rate, a decrease in rate performance and a decrease in product yield.

### SUMMARY

The purpose of this application is to provide a secondary battery and an electronic device, which can effectively decrease the internal resistance growth rate of the battery after high-temperature storage and improve the energy density of the battery on the premise of guaranteeing the safety performance of the battery.

It should be noted that in the content of this application, this application is explained by taking the secondary battery being a lithium-ion battery as an example, but the secondary battery in this application is not limited to the lithium-ion battery.

In order to solve the technical problem, this application adopts a technical solution as follow: a secondary battery, including a positive electrode plate, the positive electrode plate including a current collector, a conductive layer, a first active substance layer and a second active substance layer, the conductive layer, the first active substance layer and the second active substance layer being sequentially stacked on a surface of the current collector, the first active substance layer including a first active substance, the second active substance layer including a second active substance, the area overlap rate of particle size distribution curves of the first active substance and the second active substance being less than or equal to 40%, the conductive layer including a first conductive additive and a first adhesive.

In some examples, the Dv50 of the first active substance is 0.05µm to 8µm, the Dv50 of the second active substance is 5µm to 18µm, and a difference obtained by subtracting the Dv50 of the first active substance from the Dv50 of the second active substance is 4µm to 10µm.

In some examples, the mass fraction of the first conductive additive is 60% to 90%, and the mass fraction of the first adhesive is 10% to 40%.

In some examples, the peeling strength between the conductive layer and the current collector is 100N/m to 500N/m.

In some examples, the first conductive additive includes at least one of conductive carbon black, carbon nanotubes, graphene, conductive graphite and carbon fiber materials.

In some examples, the first conductive additive includes 60% to 95% of conductive carbon black and 5% to 40% of carbon nanotubes by mass; or the first conductive additive includes 80% to 95% of conductive carbon black and 5% to 20% of graphene by mass; or the first conductive additive includes 50% to 90% of carbon nanotubes and 10% to 50% of graphene by mass.

In some examples, the first conductive additive includes 5% to 30% of carbon nanotubes, 5% to 20% of graphene and 50% to 90% of conductive carbon black by mass.

In some examples, the first conductive additive satisfies at least one of the following conditions: (1) the diameter of the carbon nanotubes is 2nm to 6nm, the length of the carbon nanotubes is 10µm to 30µm, and the specific surface area is 200m²/g to 500 m²/g; (2) the number of layers of the graphene is 1 to 10, the sheet diameter of the graphene is 1µm to 50µm, the specific surface area is 50m²/g to 500m²/g, and the volume resistivity of the graphene is 200µΩ·m to 1000µΩ·m; (3) the Dv50 of the conductive carbon black is 20nm to 50nm, the specific surface area is 10m²/g to 50m²/g, the volume resistivity of the conductive carbon black is 500µΩ·m to 2000µΩ·m.

In some examples, the first active substance includes at least one of lithium iron phosphate, lithium manganese iron phosphate and lithium manganate, and the second active substance includes at least one of lithium cobaltate, lithium nickelate, lithium manganate, lithium nickel-cobalt manganate and lithium-rich manganese-based materials.

In some examples, the first active substance includes lithium iron phosphate.

In some examples, the first active substance layer further includes a second conductive additive and a second adhesive; based on the mass of the first active substance layer, the mass percentage content of the lithium iron phosphate is 70% to 85%, the mass percentage content of the second conductive additive is 5% to 20%, and the mass percentage content of the second adhesive is 0.5% to 5%.

In some examples, along the stacking direction of the conductive layer, the first active substance layer and the second active substance layer, the thickness of the conductive layer is 0.1µm to 2µm.

In some examples, along the stacking direction of the conductive layer, the first active substance layer and the second active substance layer, the thickness of the first active substance layer is more than the thickness of the conductive layer, and a difference obtained by subtracting the thickness of the conductive layer from the thickness of the first active substance layer is 1µm to 10µm.

In some examples, along the stacking direction of the conductive layer, the first active substance layer and the second active substance layer, a difference obtained by subtracting the thickness of the conductive layer from the thickness of the first active substance layer is 3µm to 7µm.

In some examples, the first active substance layer includes a second adhesive, the first adhesive is an oil-based adhesive, and the second adhesive is a water-based adhesive; or the first adhesive is a water-based adhesive and the second adhesive is an oil-based adhesive.

In some examples, the oil-based adhesive includes at least one of polyvinylidene fluoride, polymethyl methacrylate and polytetrafluoroethylene materials; the water-based adhesive includes at least one of carboxymethyl cellulose sodium, styrene-butadiene rubber and polyacrylic acid materials.

In order to solve the technical problem, this application adopts another technical solution as follow: an electronic device, including the secondary battery described above.

The secondary battery in this application includes a positive electrode plate. The positive electrode plate includes a current collector, a conductive layer, a first active substance layer and a second active substance layer. The conductive layer, the first active substance layer and the second active substance layer are sequentially stacked on a surface of the current collector. By providing the conductive layer between the first active substance layer and the current collector, the problem of electrochemical corrosion on the surface of the current collector can be effectively improved, thus reducing the interface impedance between the current collector and the second active substance layer and improving the performance of the secondary battery.

### BRIEF DESCRIPTION OF DRAWINGS

In order to describe the technical solutions in the specific examples of this application or the existing technology, the drawings required in the description of the specific examples or existing technology will be briefly introduced below. In all drawings, similar components or parts are generally identified by similar reference signs. In the drawings, each component or part may not necessarily be drawn to the actual scale.
FIG. 1 illustrates a schematic diagram of an electrode assembly of a secondary battery according to an example of this application.
FIG. 2 illustrates a sectional view of a positive electrode plate of a secondary battery along a thickness direction according to an example of this application.
FIG. 3 illustrates a schematic diagram of a secondary battery according to an example of this application.

### DETAILED DESCRIPTION

Unless otherwise defined, all technical and scientific terms used in this description have the same meanings as those commonly understood by technical personnel belonging to the technical field of this application. The terms used in the description of this application are only for the purpose of describing the specific examples, instead of limiting this application. The term 'and/or' used in this description includes any and all combinations of one or more related listed items. In addition, the technical features involved in different example of this application described below may be combined with each other as long as they do not conflict with each other.

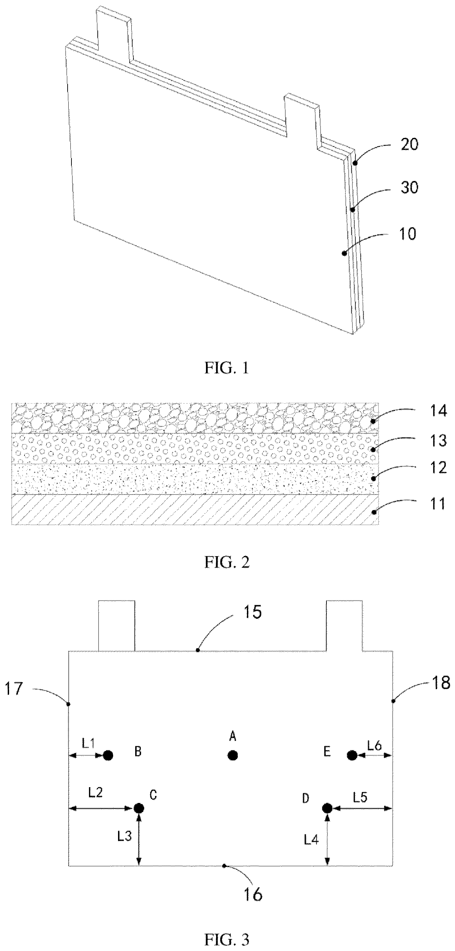

Please mainly refer to FIG. 1. A secondary battery includes a packaging bag (not shown), a positive electrode plate 10, a positive electrode tab, a negative electrode plate 20, a negative electrode tab, and a separator 30. The positive electrode plate 10 and the negative electrode plate 20 are alternately stacked through the separator 30 to form a stacked electrode assembly. The positive electrode plate 10 is electrically connected to the positive electrode tab. The negative electrode plate 20 is electrically connected to the negative electrode tab. The electrode assembly is accommodated in the packaging bag. Both the positive electrode tab and the negative electrode tab extend from the packaging bag. The packaging bag is also filled with electrolyte for electrochemical reaction of the positive electrode plate 10 and the negative electrode plate 20.

Of course, in some other examples, the positive electrode plate 10 and the negative electrode plate 20 may also be alternately spaced and stacked through the separator 30, and then wound to form a wound electrode assembly. The number of the positive electrode tabs and the negative electrode tabs may be one or more. It can be understood that the secondary battery may be an aluminum-plastic film flexible battery, a square aluminum housing battery, or a cylindrical aluminum housing battery.

Please refer to FIG. 2, the positive electrode plate 10 includes a current collector 11, a conductive layer 12, a first active substance layer 13 and a second active substance layer 14. The conductive layer 12, the first active substance layer 13 and the second active substance layer 14 are sequentially stacked on a surface of the current collector 11. On the premise of guaranteeing unchanged conductivity between the current collector 11 and the second active substance layer 14, the conductive layer 12 can increase the particle connectivity between the current collector 11 and the second active substance layer 14, and enhance the contact and adhesion strength between the second active substance layer 14 and the current collector 11 at the same time, thus effectively reducing the interface resistance between the two.

It can be understood that the current collector 11 may have only one surface on which a conductive layer 12, a first active substance layer 13 and a second active substance layer 14 are sequentially stacked, or both surfaces on each of which a conductive layer 12, a first active substance layer 13 and a second active substance layer 14 are sequentially stacked.

The conductive layer 12 includes a first conductive additive and a first adhesive. The first conductive additive is used for ensuring electrical conduction between the current collector 11 and the second active substance layer 14, while the first adhesive is used for adhering and fixing the conductive layer 12 to a position between the current collector 11 and the first active substance layer 13. Therefore, the mass fraction of the first conductive additive and the mass fraction of the first adhesive need to be within a reasonable range to ensure that the conductive layer 12 can have good conductivity and meet the corresponding adhesion, and avoid separation between the conductive layer 12 and the current collector 11 or the first active substance layer 13, which may lead to the failure of the secondary battery.

The mass fraction of the first conductive additive is 60% to 90%. The mass fraction of the first adhesive is 10% to 40%. At this time, the peeling strength between the conductive layer and the current collector is 100N/m to 500N/m. In a case that the content of the first conductive additive is too high and the content of the first adhesive is too low, it will lead to low peeling strength. Although the conductive layer can have good conductivity, it is easy to detach from the current collector. In a case that the content of the first conductive additive is too low and the content of the first adhesive is too high, it will lead to too high peeling strength. Although the conductive layer has good adhesion, its conductivity greatly decreases, thus influencing the electrochemical performance of the secondary battery. In addition, in a case that the content of the first adhesive is too high, it may increase the thickness of the conductive layer and reduce the energy density of the secondary battery.

In some examples, the first conductive additive includes at least one of conductive carbon black, carbon nanotubes, graphene, conductive graphite, acetylene black, ketjen black, and carbon fiber materials.

In some other examples, in order to further improve the conductivity of the first conductive additive, the conductive substance in the first conductive additive may include two types. For example, the first conductive additive includes 60% to 95% of conductive carbon black and 5% to 40% of carbon nanotubes by mass; or the first conductive additive includes 80% to 95% of conductive carbon black and 5% to 20% of graphene by mass; or the first conductive additive includes 50% to 90% of carbon nanotubes and 10% to 50% of graphene by mass.

In some other examples, in order to further improve the conductivity of the first conductive additive, the conductive substances in the first conductive additive may include three or more types. For example, the first conductive additive includes 5% to 30% of carbon nanotubes, 5% to 20% of graphene and 50% to 90% of conductive carbon black by mass. Due to the different structural characteristics of different materials, their conductivity varies in different dimensions. Mixing multiple different materials is beneficial for enhancing the conductivity of the first conductive additive in different dimensional directions. For example, carbon nanotubes have good conductivity in a one-dimensional direction, graphene has good conductivity in a two-dimensional direction, and conductive carbon black has good conductivity in a three-dimensional direction. Therefore, the first conductive additive can have good conductivity in one-dimensional, two-dimensional and three-dimensional directions after fully mixing carbon nanotubes, graphene and conductive carbon black.

The first conductive additive satisfies at least one of the following conditions: (1) the diameter of the carbon nanotubes is 2nm to 6nm, the length of the carbon nanotubes is 10µm to 30µm, and the specific surface area is 200m²/g to 500 m²/g; (2) the number of layers of the graphene is 1 to 10, the sheet diameter of the graphene is 1µm to 50µm, the specific surface area is 50m²/g to 500m²/g, and the volume resistivity of the graphene is 200µΩ·m to 1000µΩ·m; (3) the Dv50 of the conductive carbon black is 20nm to 50nm, the specific surface area is 10m²/g to 50m²/g, the volume resistivity of the conductive carbon black is 500µΩ·m to 2000µΩ·m. Specific surface area refers to the total area per unit mass of material.

In some examples, the first active substance layer includes a first active substance, and the second active substance layer includes a second active substance. The Dv50 of the first active substance is 0.05µm to 8µm. The Dv50 of the second active substance is 5µm to 18µm. A difference obtained by subtracting the Dv50 of the first active substance from the Dv50 of the second active substance is 4µm to 10µm. The area overlap rate of the particle size distribution curve of the first active substance and the particle size distribution curve of the second active substance is less than or equal to 40%. The Dv50 of the second active substance is more than the Dv50 of the first active substance, resulting in a larger specific surface area of the first active substance. During high-temperature storage, the gas generated during the electrochemical reaction of the secondary battery accumulates at the interface between the first active substance layer and the surface of the current collector, causing electrochemical corrosion on the surface of the current collector and increasing the contact impedance between the surface of the current collector and the first active substance layer. Due to the low density of defects in the conductive layer, it can effectively block ion current, and the conductive layer has high electron conductivity, thus allowing electrons to transfer with less resistance between the current collector and the second active substance layer. In addition, the peeling strength between the conductive layer and the surface of the current collector is high, thus making it difficult for the conductive layer to detach and separate from the current collector and the first active substance layer. The conductive layer makes the exchange current density of the electrolyte liquid oxidation reaction low. Therefore, providing the conductive layer between the first active substance layer and the surface of the current collector can effectively reduce the interface impedance between the current collector and the second active substance layer, and improve the performance of the secondary battery.

The first active substance layer includes 70% to 85% of a first substance, 5% to 10% of a second substance, 5% to 20% of a third substance, 0.5% to 5% of a fourth substance, and 0.5% to 5% of a fifth substance by mass. The first substance includes at least one of lithium iron phosphate, lithium manganese iron phosphate and lithium manganate materials. The second substance includes at least one of boehmite, aluminum oxide, titanium oxide, magnesium oxide, zirconium oxide and zinc oxide materials. The third substance includes at least one of conductive carbon black, carbon nanotubes, graphene, ketjen black and conductive graphite materials. The fourth substance includes at least one of lithium, sodium and potassium alkali metal salt, and alkaline-earth metal salt materials. The fifth substance includes at least one of carboxymethyl cellulose, polyvinyl alcohol and polyethylene glycol materials. By proportioning according to the active proportions, the first active substance layer can effectively reduce the interface impedance between the first active substance layer and the surface of the current collector, and improve the safety performance of the secondary battery at the same time.

The second active substance layer includes at least one of lithium cobaltate, lithium nickelate, lithium manganate, lithium nickel-cobalt manganate and lithium-rich manganese-based materials.

Along the stacking direction of the conductive layer, the first active substance layer and the second active substance layer, the thickness of the conductive layer is 0.1µm to 2µm. In a case that the thickness of the conductive layer is too small, it will lead to a relatively low content of the first conductive additive and the first adhesive, and the conductive layer cannot effectively prevent the corrosive effect of the gas accumulated on the surface of the current collector in the electrochemical reaction process, thus resulting in a relatively high interface impedance between the current collector and the second active substance layer, which is manifested as a high internal resistance growth rate of the secondary battery. In a case that the thickness of the conductive layer is at a certain critical value, the effect of the conductive layer on preventing corrosion on the surface of the current collector gradually tends to gentle. In a case that the thickness of the conductive layer is too large, it will reduce the energy density of the secondary battery.

Along the stacking direction of the conductive layer, the first active substance layer and the second active substance layer, the thickness of the first active substance layer is more than the thickness of the conductive layer, and a difference obtained by subtracting the thickness of the conductive layer from the thickness of the first active substance layer is 1µm to 10µm. Since the thickness of the first active substance layer is more than the thickness of the conductive layer, it can make the first active substance layer have strong wrapping ability. When the secondary battery is subjected to a nail puncture test, the current collector is punctured to produce burrs and debris. The thicker first active substance layer can effectively wrap the burrs and debris, thus preventing the current collector from directly contacting the second active substance layer for electrical conduction, avoiding fires and explosions, and guaranteeing the safety performance of the secondary battery. In other examples, the difference obtained by subtracting the thickness of the conductive layer from the thickness of the first active substance layer is 3µm to 7µm.

In some examples, the first active substance layer further includes a second conductive additive and a second adhesive; based on the mass of the first active substance layer, the mass percentage content of the lithium iron phosphate is 70% to 85%, the mass percentage content of the second conductive additive is 5% to 20%, and the mass percentage content of the second adhesive is 0.5% to 5%.

In order to better maintain the layered arrangement of the conductive layer and the first active substance layer, the first adhesive in the conductive layer may be an oil-based adhesive, and the second adhesive in the first active substance layer may be an water-based adhesive; or the first adhesive in the conductive layer is a water-based adhesive, and the second adhesive in the first active substance layer is an oil-based adhesive. By providing the first adhesive and the second adhesive which are different in types, the conductive layer and the first active substance layer after coating can be prevented from merging, thus reducing the step of drying the conductive layer and the first active substance layer after coating in an oven and improving the production efficiency.

It can be understood that the oil-based adhesive includes at least one of polyvinylidene fluoride, polymethyl methacrylate and polytetrafluoroethylene materials; the water-based adhesive includes at least one of carboxymethyl cellulose sodium, styrene-butadiene rubber and polyacrylic acid materials.

In the example of this application, the secondary battery includes a positive electrode plate. The positive electrode plate includes a current collector, a conductive layer, a first active substance layer and a second active substance layer. The conductive layer, the first active substance layer and the second active substance layer are sequentially stacked on a surface of the current collector. By providing the conductive layer between the first active substance layer and the current collector, the defect of electrochemical corrosion on the surface of the current collector can be effectively overcome, thus reducing the interface impedance between the current collector and the second active substance layer and improving the performance of the secondary battery.

This application further provides an electronic device, which includes the secondary battery described above. For the specific structure and function of the secondary battery, please refer to the example above, which will not be repeated here.

The method for preparing the negative electrode plate is not specially limited in this application, which may be a well-known preparation method in the art, as long as the purpose of this application can be achieved. For example, the method for preparing the negative electrode plate includes, but is not limited to, the following steps: dispersing a negative electrode active substance, a conductive additive, a thickener and an adhesive in deionized water to form uniform negative electrode slurry after mixing, coating the negative electrode slurry onto a negative electrode current collector, and performing drying, cold pressing, cutting, dicing and re-drying to obtain a negative electrode plate.

In this application, the negative electrode plate includes a negative electrode current collector and a negative electrode active substance layer provided on at least one surface of the negative electrode current collector. The "negative electrode active substance layer provided on at least one surface of the negative electrode current collector" refers to that the negative electrode active substance layer may be provided on one surface of the negative electrode current collector along its own thickness direction, or on two surfaces of the negative electrode current collector along its own thickness direction. The "surface" here may be the entire area of the negative electrode current collector, or it may be a partial area of the negative electrode current collector, which is not specially limited in this application, as long as the purpose of this application can be achieved. The negative electrode current collector is not specially limited in this application, as long as the purpose of this application can be achieved. For example, the negative electrode current collector may include a copper foil, a copper alloy foil, a nickel foil, a titanium foil, foam nickel or foam copper, or the like. The negative electrode active substance layer includes a negative electrode active substance. The type of the negative electrode active substance is not specially limited in this application, as long as the purpose of this application can be achieved. For example, the negative electrode active substance may include at least one of natural graphite, artificial graphite, soft carbon, hard carbon, mesophase carbon microsphere, tin-based materials, silicon-based materials, lithium titanate, transition metal nitride or natural flake graphite. Optionally, the negative electrode active substance layer further includes at least one of a conductive additive, a thickener and an adhesive. The types of the conductive additive, the thickener and the adhesive in the negative electrode active substance layer are not specially limited in this application, as long as the purpose of this application can be achieved. For example, the negative electrode adhesive may include, but is not limited to, at least one of polyvinyl alcohol, carboxymethyl cellulose, hydroxypropyl cellulose, diacetyl cellulose, polyvinyl chloride, carboxylated polyvinyl chloride, polyfluoroethylene, a polymer containing ethylidene oxide, polyvinylpyrrolidone, polyurethane, polytetrafluoroethylene, polyvinylidene fluoride, polyethylene, polypropylene, polyacrylic acid, styrene-butadiene rubber, acrylic acidified (acrylated) styrene-butadiene rubber, epoxy resin and nylon. The mass ratio of the negative electrode active substance to the conductive additive to the thickener to the adhesive in the negative electrode active substance layer is not limited in this application, as long as the purpose of this application can be achieved. For example, the mass ratio of the negative electrode active substance to the conductive additive to the thickener to the adhesive in the negative electrode active substance layer is (97-98) :(0-1.5): (0.5-1.5): (1.0-1.9).

Optionally, the negative electrode plate may further include a conductive layer. The conductive layer is located between the negative electrode current collector and the negative electrode active substance layer. The component of the conductive layer is not specially limited in this application, which may be a commonly used conductive layer in the art. The conductive layer may include, but is not limited to, the negative electrode conductive additive and the negative electrode adhesive mentioned above.

In this application, the secondary battery further includes a separator. The separator is not specially limited in this application. Those skilled in the art may select according to the actual needs, as long as the purpose of this application can be achieved. For example, the material of the separator may include, but is not limited to, at least one of polyethylene (PE), polyolefin (PO) which is mainly polypropylene (PP), polyester (such as polyethylene terephthalate (PET)), cellulose, polyimide (PI), polyamide (PA), spandex and aramid. The type of the separator may include, but is not limited to, at least one of woven membranes, non-woven membranes (non-woven fabrics), microporous membranes, composite membranes, separator paper, rolled membranes and spun membranes. For example, the separator may include a substrate layer and a surface treatment layer. The substrate layer may be a non-woven fabric, membrane or composite membrane with a porous structure. The material of the substrate layer may include at least one of polyethylene, polypropylene, polyethylene terephthalate and polyimide. Optionally, a polypropylene porous membrane, a polyethylene porous membrane, a polypropylene non-woven fabric, a polyethylene non-woven fabric or a polypropylene polyethylene polypropylene porous composite membrane may be used. Optionally, at least one surface of the substrate layer is provided with a surface treatment layer. The surface treatment layer may be a polymer layer, an inorganic layer, or a layer formed by mixing a polymer and an inorganic substance. For example, the inorganic layer includes inorganic particles and an adhesive. The inorganic particles are not specially limited. For example, the inorganic particles may be at least one selected from the group consisting of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide and barium sulfate. The adhesive is not specially limited. For example, the adhesive may be at least one selected from the group consisting of polyvinylidene fluoride, vinylidene fluoride-hexafluoropropylene copolymer, polyamide, polyacrylonitrile, polyacrylate, polyacrylic acid, polyacrylate, polyethylene pyrrolidone, polyethylene ether, polymethyl methacrylate, polytetrafluoroethylene and polyhexafluoropropylene. The polymer layer contains a polymer. The material of the polymer includes at least one of polyamide, polyacrylonitrile, acrylate polymer, polyacrylic acid, polyacrylate, polyethylene pyrrolidone, polyethylene ether, polyvinylidene fluoride, poly(vinylidene fluoride-hexafluoropropylene) and the like.

In this application, the secondary battery further includes electrolyte. The electrolyte is not specially limited in this application. Those skilled in the art may select according to the actual needs, as long as the purpose of this application can be achieved. For example, after mixing at least one of ethylene carbonate (EC), propylene carbonate (PC), diethyl carbonate (DEC), ethyl propionate (EP), propyl propanoate (PP), ethyl methyl carbonate (EMC), dimethyl carbonate (DMC), vinyl carbonate (VC) and fluoroethylene carbonate (FEC) according to a certain mass ratio to obtain a non-aqueous organic solvent, lithium salt is added, dissolved and mixed uniformly. The "mass ratio" is not specially limited in this application, as long as the purpose of this application can be achieved. The type of the lithium salt is not specially limited in this application, as long as the purpose of this application can be achieved. For example, the lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, lithium borate dioxalate (LiBOB) and lithium difluoroborate. The concentration of the lithium salt in the electrolyte is not specially limited in this application, as long as the purpose of this application can be achieved. For example, the concentration of the lithium salt is 1.0mol/L to 2.0mol/L.

In this application, the secondary battery further includes a housing. The housing is not specially limited in this application. Those skilled in the art may select according to the actual needs, as long as the purpose of this application can be achieved. For example, the housing may be an aluminum-plastic film, an aluminum housing, or a stainless steel housing.

The method for preparing the secondary battery is not specially limited in this application, which may be a well-known preparation method in the art, as long as the purpose of this application can be achieved. For example, the method for preparing the secondary battery includes, but is not limited to, the following steps: sequentially stacking a positive electrode plate, a separator and a negative electrode plate, performing operations such as winding and folding as needed to obtain an electrode assembly with a wound structure, putting the electrode assembly in a packaging bag, and injecting electrolyte into the packaging bag, and performing processes such as vacuum encapsulation, standing, formation, degassing and edge cutting to obtain a lithium-ion battery.

In order to better understand the technical solution and technical effect of the example of the secondary battery in this application, description will be made below by taking a laminated lithium-ion flexible battery as an example.

The battery includes a positive electrode plate, a negative electrode plate and a separator. The positive electrode plate includes an aluminum foil, and a conductive layer, a safety coating layer and a positive electrode active layer sequentially provided on a surface of the aluminum foil. The positive electrode plate corresponds to the positive electrode plate. The aluminum foil corresponds to the current collector. The safety coating layer corresponds to the first active substance layer. The positive electrode active layer corresponds to the second active substance layer.

### Test methods and apparatuses:

### 1. Test of peeling strength

### (1) Test of peeling strength between conductive layer and current collector

The lithium-ion battery was disassembled to obtain the positive electrode plate. The positive electrode plate was immersed in dimethyl carbonate (DMC) for 4h to remove electrolyte. Then, baking was performed at 85°C for 30min. Finally, the first active substance layer and the second active substance layer were peeled off by using a double-sided adhesive tape (Nitto 5000NS). Cutting was performed to obtain a sample with a size of 10CM*10CM. The sample was pasted on a steel plate by using a double-sided adhesive tape (Nitto 5000NS). The other side was stuck by using an adhesive tape. One end of the adhesive tape was fixed on a tensile strength tester. The adhesive tape was pulled at a speed of 50mm/min in a direction of 180°. A tensile force FN when it was stable was recorded to obtain the peeling strength between the conductive layer and the current collector = 10FN/m.

### (2) Test of peeling strength between conductive layer and first active substance layer

The lithium-ion battery was disassembled to obtain the positive electrode plate. The positive electrode plate was immersed in dimethyl carbonate (DMC) for 4h to remove electrolyte. Then, baking was performed at 85°C for 30min. Finally, the second active substance layer was peeled off by using a double-sided adhesive tape (Nitto 5000NS). The outer layer of the first active substance layer was stuck by using a double-sided adhesive tape (Nitto 5000NS). Cutting was performed to obtain a sample with a size of 10CM*10CM. The sample was pasted on a steel plate by using a double-sided adhesive tape (Nitto 5000NS). The other side was stuck by using an adhesive tape. One end of the adhesive tape was fixed on a tensile strength tester. The adhesive tape was pulled at a speed of 50mm/min in a direction of 180°. A tensile force FN when it was stable was recorded to obtain the peeling strength between the conductive layer and the first active substance layer = 10FN/m.

### 2. Test of internal resistance of secondary battery

A universal resistance tester (HT2572) was used to test the AC internal resistance of the secondary battery at a sinusoidal frequency of 1KHz.

### 3. Test of internal resistance growth rate of secondary battery

In an environment of 25±3°C, the secondary battery was charged to 4.45V at 0.2C constant current and then charged to 0.025C at constant voltage of 4.45V. The initial internal resistance of the secondary battery was recorded as IMP₀. The secondary battery was placed in a high-temperature furnace at 85±3°C for 6h, and then it was taken out. After the temperature of the secondary battery decreased to 25±3°C, its internal resistance was tested and recorded as "IMP₆ₕ". The internal resistance growth rate of the secondary battery after being placed at 85°C for 6h was recorded as (IMP₆ₕ - IMP₀)/IMP₀*100%.

### 4. Pass rate of nail puncture test of secondary battery

1) The secondary battery was placed in an incubator of 25°C±5°C and stood for 30min to enable the lithium-ion battery to reach constant temperature.
2) The lithium-ion battery that had reached constant temperature was charged to 4.45V at constant current of 0.5C, and then charged at constant voltage of 4.45V until the current was lower than 0.02C, so that the lithium-ion battery was in a fully charged state. Before testing, the appearance was checked, and photos were taken.
3) In a test environment of 20±5°C, the battery sample was placed on a test bench. A steel nail with a diameter of 4mm was used to puncture the battery sample at a speed of 40mm/s from five positions respectively (as illustrated in FIG. 3). When viewed in a direction perpendicular to the surface of the battery sample, the battery had a top side 15 extending from the electrode tab, a bottom side 16 opposite to the top side 15, and a first side 17 and a second side 18 on opposite sides. The five positions were respectively point A located in the center of the surface of the battery, point B located at the midpoint of the first side 17 and having a distance L1 of 6.5mm to the first side 17, point C having a distance L2 of 10mm to the first side 17 and a distance L3 of 10mm to the bottom side 16, point D having a distance L5 of 10mm to the second side 18 and a distance L4 of 10mm to the bottom side 16, and point E located at the midpoint of the second side 18 and having a distance L6 of 6.5mm to the second side 18. The tested battery sample was completely punctured from the above five positions.
4) Measurement frequency: voltage and internal resistance were measured at a frequency of 1KHZ. Measurement was performed after pretreatment and testing.
5) Requirements: the battery sample was completely punctured at one time, it was not allowed to pull out the nail midway, and the test was not stopped until the surface temperature of the battery decreased to 55°C.
6) Determination criteria: the battery sample did not catch fire and explode.
7) Drop test pass rate = drop test pass times/total times

### 5. Test of thickness of conductive layer, first active substance layer and second active substance layer

1) In an environment of (25±3)°C, the positive electrode plate was disassembled from the secondary battery, and the residual electrolyte liquid on the surface was wiped off.
2) The positive electrode plate was cut under plasmas to obtain its cross section.
3) The cross section was analyzed under an SEM. The thickness of the conductive layer, the first active substance layer and the second active substance layer was tested. The spacing between adjacent test points was 2mm to 3mm. At least 15 different points were selected for testing. The average value of all test point of each of the aluminized layer, the first active substance layer and the second active substance layer was recorded as the thickness of each layer.

### 6. Test of mass fraction of carbon nanotubes, graphene and conductive carbon black

1) In an environment of (25±3)°C, the positive electrode plate was disassembled from the secondary battery, and the residual electrolyte liquid on the surface was wiped off.
2) The positive electrode plate was cut under plasmas to obtain its cross section.
3) The cross section was analyzed under an SEM, the conductive layer was peeled off and its mass was measured.
4) The adhesive was removed. Ultrasonic cleaning was performed on the water-based adhesive by using water, while the oil-based adhesive was dissolved by using methyl pyrrolidone (NMP) to obtain the conductive additive.
5) For the conductive additive, a Raman spectroscopy analysis method was adopted to distinguish carbon nanotubes, graphene and conductive carbon black through (1) position, (2) peak intensity and (3) ID/IG of D-band and G-band.
6) The content of carbon nanotubes, graphene and conductive carbon black was measured by adopting an X-ray diffraction analysis method.

### 7. Measurement of Dv50

For the particle size testing method, refer to GBIT 19077-2016. A transparent adhesive tape was used to peel off the first active substance layer and the second active substance layer. A laser particle size analyzer was used to test the average particle size of the first active substance layer and the second active substance layer in the first active substance layer. In the testing process, when the laser beam passed through dispersed particle samples, the particle size was measured by measuring the intensity of the scattered light. The refractive index of the particles used in the test was 1.8. A sample was tested three times. The values of the particle sizes in the three tests were finally averaged to obtain Dv10, Dv50 and Dv90. The model of the laser particle size analyzer was UK Malvern Mastersizer3000. The test range was 0.01µm to 3500µm. The detection limit was 10nm. In regard to repeatability, for samples with a particle size Dv50≥10µm, Cov% was less than 3%, where Cov was the ratio of particle size standard deviation to average value.

### 8. Test method of area overlap rate of particle size distribution curves

The particle size distribution curve, also known as the particle size distribution frequency curve, was a wavy and smooth frequency curve connecting the points of the percentage content of each particle size after drawing the corresponding points according to the percentage content of each particle size in the coordinate system with the particle size as the abscissa and the percentage content as the ordinate.

The particle size of the first active substance and the particle size of the second active substance were marked in the same coordinate system to obtain two frequency curves which overlapped with each other. The area overlap rate was obtained through differentiation.

### Example 1

### [Preparation of positive electrode plate]

### <Preparation of current collector>

Commercially available aluminum foils with a thickness of 10µm were used.

### <Preparation of conductive layer>

60% of a first conductive additive (70% of conductive carbon black+30% of carbon nanotubes) and 40% of PVDF by mass were mixed uniformly. N-methyl-2-pyrrolidone (NMP) was added as a solvent. Full mixing was performed to obtain conductive slurry with excellent dispersion stability. The conductive slurry was uniformly coated on a current collector. Drying was performed at 90°C to obtain a conductive layer with a thickness of 0.5µm. Then, the above steps were repeated on the other surface of the current collector to form a double-sided coated conductive layer.

### <Preparation of first active substance layer>

Lithium iron phosphate (LFP, Dv50=12µm, obtained by screening through a particle size screening tool), aluminum oxide, carbon nanotubes, PVDF and polyethylene glycol (PEG) were mixed according to a mass ratio of 77:7:12:2:2. N-methyl-2-pyrrolidone (NMP) was added as a solvent to obtain first active substance layer slurry with a solid content of 30wt%. Uniform mixing was performed. The first active substance layer slurry was uniformly coated on one surface of a conductive layer through a coating process. Then, drying was performed at 90°C to obtain a first active substance layer with a thickness of 5µm. Then, the above steps were repeated on the other surface of the conductive layer to form a double-sided coated first active substance layer.

### <Preparation of second active substance layer>

Lithium cobaltate (LCO, with an average particle size of 12µm, obtained by screening through a particle size screening tool), PVDF and conductive carbon black (SP) were mixed according to a mass ratio of 97:1.5:1.5. NMP was added as a solvent to obtain second active substance layer slurry with a solid content of 75wt%. Uniform mixing was performed. The second active substance layer slurry was uniformly coated on one surface of the first active substance layer through a coating process. Then, drying was performed at 90°C to obtain a second active substance layer with a thickness of 120µm. Then, the above steps were repeated on the other surface of the first active substance layer to form a double-sided coated second active substance layer.

### [Preparation of negative electrode plate]

Artificial graphite, conductive carbon black (SP), styrene-butadiene rubber (SBR) and carboxymethyl cellulose sodium (CMC) were mixed according to a mass ratio of 97:1: 1:1. Deionized water was added to obtain slurry with a solid content of 75wt%. Uniform mixing was performed. The slurry was uniformly coated on one surface of a negative electrode current collector copper foil with a thickness of 6µm. Drying was performed at 85°C to obtain a negative electrode plate coated with a negative electrode active substance layer with a thickness of 120µm. Then, the above steps were repeated on the other surface of the negative electrode plate to obtain a negative electrode plate coated with the negative electrode active substance on two sides. Then, cold pressing, stripping, cutting and negative electrode tab welding were performed on the obtained negative electrode plate to obtain a negative electrode plate.

### [Preparation of electrolyte liquid]

Ethylene carbonate, propylene carbonate, diethyl carbonate, propyl propanoate and vinylene carbonate were mixed according to a mass ratio of 20:30:20:28:2 to obtain a non-aqueous organic solvent. Then, lithium salt LiPF₆ and the non-aqueous organic solvent were mixed according to a mass ratio of 8:92 to obtain electrolyte liquid.

### [Preparation of separator]

A porous polyethylene film with a thickness of 7µm was adopted.

### [Preparation of lithium-ion battery]

The positive electrode plate, the separator and the negative electrode plate prepared above were sequentially stacked. The separator was placed between the positive electrode plate and the negative electrode plate for separation. Stacking was performed to obtain an electrode assembly. The electrode assembly was placed in an aluminum-plastic film packaging bag. Drying was performed. Then, the electrolyte liquid was injected. Process such as vacuum encapsulation, standing, formation, degassing and edge cutting were performed to obtain a lithium-ion battery.

### Example 2 to Example 4

Except the step of adjusting the Dv50 of the first active substance and the Dv50 of the second active substance to enable the area overlap rate of the particle size distribution curves to be different as shown in Table 1 in <preparation of first active substance layer> and <preparation of second active substance layer>, other steps were the same as those in Example 1.

### Example 5 to Example 10

Except the step of adjusting the Dv50 of the first active substance and the Dv50 of the second active substance to enable the area overlap rate of the particle size distribution curves to be different as shown in Table 1 in <preparation of first active substance layer> and <preparation of second active substance layer>, other steps were the same as those in Example 1.

### Example 11 to Example 15

Except the step of adjusting the content of the first conductive additive in the conductive layer as shown in Table 1 in <preparation of conductive layer>, other steps were the same as those in Example 1.

### Example 16 to Example 20

Except the step of respectively adjusting the component of the first conductive additive in the conductive layer as shown in Table 1 in <preparation of conductive layer>, other steps were the same as those in Example 1.

### Example 21 to Example 25

Except the step of adjusting the thickness of the conductive layer as shown in Table 1 in <preparation of conductive layer>, other steps were the same as those in Example 1.

### Example 26 to Example 35

Except the step of respectively adjusting the content of carbon nanotubes, the content of graphene and the content of conductive carbon black as shown in Table 2 in <preparation of conductive layer>, other steps were the same as those in Example 1.

### Example 36 to Example 43

Except the step of adjusting the difference between the thickness of the first active substance layer and the thickness of the conductive layer as shown in Table 3 in <preparation of conductive layer> and <preparation of first active substance layer>, other steps were the same as those in Example 1.

### Comparative Example 1

Except the step of adjusting the Dv50 of the first active substance and the Dv50 of the second active substance to enable the area overlap rate of the particle size distribution curves to be different as shown in Table 1 in <preparation of first active substance layer> and <preparation of second active substance layer>, other steps were the same as those in Example 1.

### Comparative Example 2

Except not providing the conductive layer as shown in Table 2 in <preparation of conductive layer>, other steps were the same as those in Example 1.

### Comparative Example 3

Except not providing the conductive layer as shown in Table 2 in <preparation of conductive layer>, other steps were the same as those in Example 5.

### Comparative Example 4

Except not providing the conductive layer as shown in Table 2 in <preparation of conductive layer>, other steps were the same as those in Example 6.

### Comparative Example 5

Except not providing the conductive layer as shown in Table 2 in <preparation of conductive layer>, other steps were the same as those in Example 7.

### Comparative Example 6

Except not providing the conductive layer as shown in Table 2 in <preparation of conductive layer>, other steps were the same as those in Example 8.

### Comparative Example 7

Except not providing the conductive layer as shown in Table 2 in <preparation of conductive layer>, other steps were the same as those in Example 9.

### Comparative Example 8

Except not providing the conductive layer as shown in Table 2 in <preparation of conductive layer>, other steps were the same as those in Example 10.

**Table 1**

| | Area overla p rate of particl e size distrib ution curves/ % | Dv50 of first active substanc e/µm | Dv50 of second active substanc e/µm | Dv50 differen ce/µm | Thick ness of condu ctive layer/ µm | Conte nt of first condu ctive additiv e/% | Proper tion of compo nent of first conduc tive additiv e | Peelin g strengt h betwe en condu ctive layer and curren t collect or N/m | Peelin g strengt h betwe en first active substa nce layer and condu ctive layer N/m | Nail punctur e perform ance |
|---|---|---|---|---|---|---|---|---|---|---|
| Compar ative Exampl e 1 | 45 | 2 | 8 | 6 | 0.5 | 60 | 70% of conduc tive carbon black+ 30% of carbon nanotu bes | 432.5 | 107.5 | 5110 |
| Exampl e 1 | 40 | 2 | 8 | 6 | 0.5 | 60 | 70% of conduc tive carbon black+ 30% of carbon nanotu bes | 429.4 | 327.4 | 10/10 |
| Exampl e 2 | 30 | 2 | 8 | 6 | 0.5 | 60 | 70% of conduc tive carbon black+ 30% of carbon nanotu bes | 431.6 | 374.8 | 10/10 |

From Comparative Example 1 and Examples 1-2, it can be seen that the area overlap rate of the particle size distribution curves of the first active substance and the second active substance is more than 40%, so that the peeling strength between the first active substance layer and the conductive layer decreases sharply, that is, the first active substance layer is easily separated from the conductive layer, and when the secondary battery is punctured, the first active substance layer cannot effectively wrap the burrs and debris formed by the current collector at the puncture position, which easily causes the problem of short-circuiting between the current collection layer and the second active substance layer. In a case that the area overlap rate of the particle size distribution curves of the first active substance and the second active substance is less than or equal to 40%, it can ensure a large peeling strength between the first active substance layer and the conductive layer, thus improving the safety performance of the secondary battery.

**Table 2**

| | Area overla prate of particl e size distrib ution curves | Dv50 of first active substan ce/µm | Dv50 of second active substan ce/µm | Dv50 differen ce/µm | Thick ness of condu ctive layer/ µm | Conte nt of first condu ctive additi ve/% | Proportio n of compone nt of first conducti ve additive | Inter nal resist ance grow th rate/ % | Peelin g streng th betwe en condu ctive layer and curren t collec tor N/m | Nail punc ture test pass rate |
|---|---|---|---|---|---|---|---|---|---|---|
| Comparative Example 2 | 40 | 2 | 8 | 6 | / | / | / | 47.2 % | / | 10/1 0 |
| Comparative Example 3 | 40 | 2 | 5 | 3 | / | / | / | 34.3 % | / | 10/1 0 |
| Comparative Example 4 | 40 | 4 | 8 | 4 | / | / | / | 40.1 % | / | 10/1 0 |
| Comparative Example 5 | 40 | 4 | 10 | 6 | / | / | / | 45.2 % | / | 10/1 0 |
| Comparative Example 6 | 40 | 6 | 14 | 8 | / | / | / | 48.6 % | / | 10/1 0 |
| Comparative Example 7 | 40 | 8 | 18 | 10 | / | / | / | 53.8 % | / | 10/1 0 |
| Comparative Example 8 | 40 | 7 | 18 | 11 | / | / | / | 58.2 % | / | 10/1 0 |
| Example 1 | 40 | 2 | 8 | 6 | 0.5 | 60 | 70% of conducti ve carbon black+30 % of carbon nanotube s | 25.2 % | 429.4 | 10/1 0 |
| Example 2 | 30 | 2 | 8 | 6 | 0.5 | 60 | 70% of conducti ve carbon black+30 % of carbon nanotube s | 26.9 % | 431.6 | 10/1 0 |
| Example 3 | 20 | 2 | 8 | 6 | 0.5 | 60 | 70% of conducti ve carbon black+30 % of carbon nanotube s | 29.5 % | 430.8 | 10/1 0 |
| Example 4 | 10 | 2 | 8 | 6 | 0.5 | 60 | 70% of conducti ve carbon black+30 % of carbon nanotube s | 34.4 % | 433.1 | 10/1 0 |
| Example 5 | 40 | 2 | 5 | 3 | 0.5 | 60 | 70% of conducti ve carbon black+30 % of carbon nanotube s | 23.8 % | 429.7 | 7/10 |
| Example 6 | 40 | 4 | 8 | 4 | 0.5 | 60 | 70% of conducti ve carbon black+30 % of carbon nanotube s | 27.5 % | 432.8 | 8/10 |
| Example 7 | 40 | 4 | 10 | 6 | 0.5 | 60 | 70% of conducti ve carbon black+30 % of carbon nanotube s | 31.9 % | 428.7 | 9/10 |
| Example 8 | 40 | 6 | 14 | 8 | 0.5 | 60 | 70% of conducti ve carbon black+30 % of carbon nanotube s | 33.3 % | 430.2 | 10/1 0 |
| Example 9 | 40 | 8 | 18 | 10 | 0.5 | 60 | 70% of conducti ve carbon black+30 % of carbon nanotubes | 37.6 % | 432.6 | 10/1 0 |
| Example 10 | 40 | 7 | 18 | 11 | 0.5 | 60 | 70% of conducti ve carbon black+30 % of carbon nanotube s | 41.4 % | 431.4 | 10/1 0 |
| Example 11 | 40 | 2 | 8 | 6 | 0.5 | 55 | 70% of conducti ve carbon black+30 % of carbon nanotube s | 40.7 % | 528.6 | 10/1 0 |
| Example 12 | 40 | 2 | 8 | 6 | 0.5 | 70 | 70% of conducti ve carbon black+30 % of carbon nanotube s | 22.2 % | 365.7 | 10/1 0 |
| Example 13 | 40 | 2 | 8 | 6 | 0.5 | 80 | 70% of conducti ve carbon black+30 % of carbon nanotube s | 20.1 % | 287.4 | 10/1 0 |
| Example 14 | 40 | 2 | 8 | 6 | 0.5 | 90 | 70% of conducti ve carbon black+30 % of carbon nanotube s | 18.6 % | 154.6 | 10/1 0 |
| Example 15 | 40 | 2 | 8 | 6 | 0.5 | 95 | 70% of conducti ve carbon black+30 % of carbon nanotube s | 17.8 % | 98.5 | 9/10 |
| Example 16 | 40 | 2 | 8 | 6 | 0.5 | 60 | Conducti ve carbon black | 29.5 % | 430.4 | 10/1 0 |
| Example 17 | 40 | 2 | 8 | 6 | 0.5 | 60 | Caron nanotube s | 28.8 % | 429.7 | 10/1 0 |
| Example 18 | 40 | 2 | 8 | 6 | 0.5 | 60 | Graphen e | 27.3 % | 431.5 | 10/1 0 |
| Example 19 | 40 | 2 | 8 | 6 | 0.5 | 60 | 85% of conducti ve carbon black+15 % of carbon nanotube s | 20.5 % | 428.8 | 10/1 0 |
| Example 20 | 40 | 2 | 8 | 6 | 0.5 | 60 | 30% of carbon nanotube s+20% of graphene +50% of conducti ve carbon black | 17.4 % | 429.1 | 10/1 0 |
| Example 21 | 40 | 2 | 8 | 6 | 0.05 | 60 | 70% of conducti ve carbon black+30 % of carbon nanotube s | 31.8 % | 430.6 | 10/1 0 |
| Example 22 | 40 | 2 | 8 | 6 | 1 | 60 | 70% of conducti ve carbon black+30 % of carbon nanotube s | 19.6 % | 428.9 | 10/1 0 |
| Example 23 | 40 | 2 | 8 | 6 | 1.5 | 60 | 70% of conducti ve carbon black+30 % of carbon nanotube s | 14.2 % | 432.2 | 10/1 0 |
| Example 24 | 40 | 2 | 8 | 6 | 2 | 60 | 70% of conducti ve carbon black+30 % of carbon nanotube s | 10.4 % | 431.7 | 10/1 0 |
| Example 25 | 40 | 2 | 8 | 6 | 2.5 | 60 | 70% of conducti ve carbon black+30 % of carbon nanotube s | 8.7% | 432.7 | 9/10 |

According to the above test data, the following can be concluded:
(1) According to Comparative Example 2 and Example 1, it can be seen that providing the conductive layer between the surface of the current collector and the safety coating layer (the first active substance layer) can effectively alleviate the problem of electrochemical corrosion on the surface of the current collector, thus reducing the internal resistance growth rate of the battery.
(2) According to Examples 1 to 4, it can be seen that the area overlap rate of the particle size distribution curves of the first active substance layer and the second active substance layer gradually increases, indicating that the closer the particle size of the first active substance layer and the particle size of the second active substance layer are, the less gas accumulates between the first active substance layer and the current collector during the electrochemical reaction of the secondary battery, thus reducing the internal resistance growth rate of the secondary battery. However, according to the results in Table 1, in a case that the area overlap rate of the particle size distribution curves of the first active substance layer and the second active substance layer is more than 40%, when the secondary battery is punctured, the first active substance layer cannot effectively wrap the burrs and debris formed by the current collection at the puncture position, which easily causes of short-circuiting between the current collector and the second active substance layer. Therefore, the area overlap rate of the particle size distribution curves of the two needs to be less than or equal to 40%.
(3) According to Comparative Examples 3 to 8 and Examples 5 to 10, it can be seen that to a certain extent, the greater the difference between the Dv50 of the positive electrode active substance (second active substance layer) and the Dv50 of the safety coating layer substance (first active substance), the more serious the problem of electrochemical corrosion on the surface of the current collector, and the higher the internal resistance growth rate after high-temperature storage. However, in a case that the difference between the Dv50 of the positive electrode active substance and the Dv50 of the safety coating layer substance is too small, when the secondary battery is punctured, the first active substance layer cannot effectively wrap the burrs and debris formed at the puncture position, which easily causes the problem of short-circuiting between the current collector and the second active substance layer. Therefore, the difference obtained by subtracting the Dv50 of the safety coating layer substance from the Dv50 of the positive electrode active substance needs to be 4µm to 10µm.
(4) According to Examples 11 to 15, it can be seen that in a case that the content of the first conductive additive in the conductive layer is too high, although it can alleviate the problem of electrochemical corrosion on the surface of the current collector, the content of the adhesive is relatively low, the peeling strength between the conductive layer decreases sharply, and it easily causes the separation of the conductive layer and the current collector after charge and discharge cycles; in a case that the content of the adhesive is high, although it can ensure the peeling strength of the conductive layer, the content of the first conductive additive decreases, which causes a decrease in the conductivity of the conductive layer and fails to effectively alleviate the problem of electrochemical corrosion on the surface of the current collector.
(5) According to Examples 16 to 20, it can be seen that appropriately increasing the material type of the first conductive additive can enhance the conductivity of the first conductive additive, thus reducing the internal resistance growth rate of the secondary battery.
(6) According to Examples 21 to 25, it can be seen that in a case that the thickness of the conductive layer is too small, it will cause the conductive layer to fail to effectively alleviate the problem of electrochemical corrosion on the surface of the current collector; after the thickness of the conductive layer reaches a certain level, its effect tends to stabilize, and an excessively thick conductive layer will influence the energy density of the battery.

**Table 3**

| | Content of carbon nanotubes/% | Content of graphene/% | Content of conductive carbon black/% | Internal resistance growth rate/% |
|---|---|---|---|---|
| Example 26 | 3% | 3% | 94% | 24.5% |
| Example 27 | 5 | 5 | 90 | 22.6% |
| Example 28 | 10 | 10 | 80 | 20.1% |
| Example 29 | 15 | 15 | 70 | 17.4% |
| Example 30 | 20 | 20 | 60 | 14.9% |
| Example 31 | 20 | 30 | 50 | 16.1% |
| Example 32 | 25 | 25 | 50 | 15.2% |
| Example 33 | 30 | 20 | 50 | 8.4% |
| Example 34 | 30 | 25 | 45 | 14.3% |
| Example 35 | 35 | 20 | 45 | 13.9% |

According to the above test data, the following can be concluded:
1) In a case that the content of carbon nanotubes is higher than 30%, particles in the first conductive additive will agglomerate, thus leading to a decrease in the conductivity of the first conductive additive and an increase in the internal resistance growth rate of the battery.

In a case that the content of graphene is higher than 20%, the particles in the first conductive additive will agglomerate, thus leading to a decrease in the conductivity of the first conductive additive and an increase of the internal resistance growth rate of the battery.

**Table 4**

| | Thickness of conductive layer /µm | Thickness of safety coating layer/µm | Difference between thickness of safety coating layer and thickness of conductive layer/µm | Nail puncture test pass rate |
|---|---|---|---|---|
| Example 36 | 0.5 | 1 | 0.5 | 6/10 |
| Example 37 | 0.5 | 1.5 | 1 | 7/10 |
| Example 38 | 0.5 | 3.5 | 3 | 9/10 |
| Example 39 | 0.5 | 5.5 | 5 | 10/10 |
| Example 40 | 0.5 | 7.5 | 7 | 10/10 |
| Example 41 | 0.5 | 9.5 | 9 | 10/10 |
| Example 42 | 0.5 | 10.5 | 10 | 10/10 |
| Example 43 | 0.5 | 11.5 | 11 | 10/10 |

According to the above test data, the following can be concluded:
(1) In a case that the difference between the thickness of the safety coating layer (the first active substance layer) and the thickness of the conductive layer is less than 1µm, that is, the thickness of the safety coating is too small, when the secondary battery is punctured, the safety coating layer cannot effectively wrap the burrs and debris formed at the puncture position, which easily causes the problem of short-circuiting to the secondary battery in the nail puncture process; in a case that the difference between the thickness of the safety coating layer and the thickness of the conductive layer is more than 10µm, although the safety coating layer can ensure the safety performance of the secondary battery, its excessive thickness leads to a decrease in the energy density of the secondary battery.
(2) In a case that the difference between the thickness of the safety coating layer (the first active substance layer) and the thickness of the conductive layer is between 3µm and 7µm, the safety coating layer can effectively ensure the safety performance of the secondary battery when punctured without causing a decrease in the energy density of the secondary battery.
The above are only examples of this application and do not limit the scope of protection of this application. Any equivalent structure or equivalent process transformations made according to the content of the description and drawings of this application, or direct or indirect applications in other related technical fields, are also included in the scope of protection of this application

## Claims

1. A secondary battery, comprising a positive electrode plate (10); **characterized in that**, the positive electrode plate (10) comprising a current collector (11), a conductive layer (12), a first active substance layer (13) and a second active substance layer (14); the conductive layer (12), the first active substance layer (13) and the second active substance layer (14) being sequentially stacked on a surface of the current collector (11); the first active substance layer (13) comprising a first active substance, the second active substance layer (14) comprising a second active substance; an area overlap rate of particle size distribution curves of the first active substance and the second active substance being less than or equal to 40%, the conductive layer (12) comprising a first conductive additive and a first adhesive.

2. The secondary battery according to claim 1, **characterized in that** a Dv50 of the first active substance is 0.05µm to 8µm, a Dv50 of the second active substance is 5µm to 18µm, and a difference obtained by subtracting the Dv50 of the first active substance from the Dv50 of the second active substance is 4µm to 10µm.

3. The secondary battery according to claim 1, **characterized in that** based on a mass of the conductive layer (12), a mass fraction of the first conductive additive is 60% to 90%, and a mass fraction of the first adhesive is 10% to 40%.

4. The secondary battery according to any one of claims 1-3, **characterized in that** a peeling strength between the conductive layer (12) and the current collector (11) is 100N/m to 500N/m.

5. The secondary battery according to any one of claims 1-4, **characterized in that** the first conductive additive comprises at least one of conductive carbon black, carbon nanotubes, graphene, conductive graphite or carbon fiber materials.

6. The secondary battery according to claim5, **characterized in that** based on a mass of the conductive layer (12), the first conductive additive comprises 60% to 95% of conductive carbon black and 5% to 40% of carbon nanotubes by mass; or
based on a mass of the conductive layer (12), the first conductive additive comprises 80% to 95% of conductive carbon black and 5% to 20% of graphene by mass; or
based on a mass of the conductive layer (12), the first conductive additive comprises 50% to 90% of carbon nanotubes and 10% to 50% of graphene by mass.

7. The secondary battery according to claim 5, **characterized in that** based on a mass of the conductive layer (12), the first conductive additive comprises 5% to 30% of carbon nanotubes, 5% to 20% of graphene and 50% to 90% of conductive carbon black by mass.

8. The secondary battery according to claim 7, **characterized in that** the first conductive additive satisfies at least one of the following conditions:
(1) a diameter of the carbon nanotubes is 2nm to 6nm, a length of the carbon nanotubes is 10µm to 30µm, and a specific surface area of the carbon nanotubes is 200m²/g to 500 m²/g;
(2) the number of layers of the graphene is 1 to 10, a sheet diameter of the graphene is 1µm to 50µm, a specific surface area of the graphene is 50m²/g to 500m²/g, and a volume resistivity of the graphene is 200µΩ·m to 1000µΩ·m;
(3) a Dv50 of the conductive carbon black is 20nm to 50nm, a specific surface area of the carbon black is 10m²/g to 50m²/g, a volume resistivity of the conductive carbon black is 500µΩ·m to 2000µΩ·m.

9. The secondary battery according to any one of claims 1-8, **characterized in that** the first active substance comprises at least one of lithium iron phosphate, lithium manganese iron phosphate and lithium manganate, and the second active substance comprises at least one of lithium cobaltate, lithium nickelate, lithium manganate, lithium nickel-cobalt manganate or lithium-rich manganese-based materials.

10. The secondary battery according to claim 9, **characterized in that** the first active substance comprises lithium iron phosphate; and
the first active substance layer (13) further comprises a second conductive additive and a second adhesive; based on a mass of the first active substance layer (13), a mass percentage content of the lithium iron phosphate is 70% to 85%, a mass percentage content of the second conductive additive is 5% to 20%, and a mass percentage content of the second adhesive is 0.5% to 5%.

11. The secondary battery according to claim 1, **characterized in that** along a stacking direction of the conductive layer (12), the first active substance layer (13) and the second active substance layer (14), a thickness of the conductive layer (12) is 0.1µm to 2µm.

12. The secondary battery according to claim 9, wherein along a stacking direction of the conductive layer (12), the first active substance layer (13) and the second active substance layer (14), the thickness of the first active substance layer (13) is more than a thickness of the conductive layer (12), and a difference obtained by subtracting a thickness of the conductive layer (12) from a thickness of the first active substance layer (13) is 1µm to 10µm.

13. The secondary battery according to claim 12, **characterized in that** along the stacking direction of the conductive layer (12)_, the first active substance layer (13) and the second active substance layer (14), the difference obtained by subtracting the thickness of the conductive layer (12) from the thickness of the first active substance layer (13) is 3µm to 7µm.

14. The secondary battery according to claim 1, **characterized in that** the first active substance layer (13) further comprises a second adhesive, the first adhesive is an oil-based adhesive, and the second adhesive is a water-based adhesive; or
the first adhesive is a water-based adhesive and the second adhesive is an oil-based adhesive; and
the oil-based adhesive comprises at least one of polyvinylidene fluoride, polymethyl methacrylate or polytetrafluoroethylene materials; the water-based adhesive comprises at least one of carboxymethyl cellulose sodium, styrene-butadiene rubber or polyacrylic acid materials.

15. An electronic device, comprising the secondary battery according to any one of claims 1-14.
